# EUROPEAN PATENT APPLICATION

(11) **EP 3 260 424 A1**
(43) Date of publication of application: **27.12.2017**
(21) Application number: 16176177.0
(22) Date of filing: 24.06.2016
(51) Int. Cl.: C02F 1/44, C02F 1/20, C02F 1/00, B01D 61/02, B01D 61/12, B01D 61/04, C02F 103/32, C02F 103/08, C02F 101/10

(54) **FLUID TREATMENT SYSTEM AND METHOD**

(71) Applicant: Siemens Aktiengesellschaft, 80333 München (DE)
(72) Inventor: Grausam, Anita, 0613 Oslo (NO); Mehlen, Mari, 0591 Oslo (NO); Wendelbo, Helene, 0613 Oslo (NO)
(74) Representative: Maier, Daniel Oliver

(57) **Abstract**

A fluid treatment system comprises an inlet to receive fluid (1) from a fluid feed source, a feed fluid treatment unit (2) and one or more downstream treatment units (6). The system further comprises a treated fluid recirculation loop (12a, 12b) from an outlet of at least one of the feed fluid treatment unit (2), or the downstream treatment units (6); and a controller (13).

## Description

This invention relates to a fluid treatment system and process, in particular for treatment of seawater on an offshore platform, although it may also be applicable for treatment of other fluids in other locations, such as drinking water plant, or dairy production.

In fluid treatment processes, for example using salt removal membranes, in particular, sulphate removal membranes, or reverse osmosis membranes, the systems are typically designed for a specific flow rate per unit area, usually referred to as flux and if the flux of the liquid being treated reduces by more than a small amount, the performance of the membranes is reduced. For example, in offshore production, injection water is used to maintain pressure in a well.. This injection water is typically produced by processing seawater on the offshore platform. The processing involves removal of salts and oxygen from the seawater. The equipment and chemicals required to do this are costly, bulky and use a lot of energy. In order to maintain the performance of the membranes, even when the amount of injection water required reduces as the well ages, treated water is dumped into the sea. This has consequences for the environment, so is best avoided.

In accordance with a first aspect of the present invention a fluid treatment system comprises an inlet to receive fluid from a fluid feed source; a feed fluid treatment unit; and one or more downstream treatment units; the system further comprising a treated fluid recirculation loop from an output of at least one of the feed fluid treatment unit, or the downstream treatment units; and a controller.

Preferably, the feed fluid treatment unit comprises a plurality of feed fluid treatment sub-units in parallel.

Preferably, at least one downstream treatment unit comprises a plurality of sub-units in parallel.

Preferably, the feed fluid treatment unit comprise one of a salt removal unit, or a reverse osmosis unit.

Preferably, the downstream treatment unit comprises at least one of a deaeration system or a chemical polishing unit.

Preferably, the system further comprises feed fluid pre-treatment units.

Preferably, the fluid comprises water.

Preferably, the feed fluid comprises seawater, water supplies for drinking water, or fluid for dairy production.

In accordance with a second aspect of the present invention, a method of treating a fluid using a fluid treatment system according to any preceding claim, the method comprising determining a fluid flux requirement at a point in a production process; determining whether the flux requirement is below a treatment unit outlet flux upstream of that point; and if so, sending a signal from the controller to control an actuator to divert at least a fraction of the treated fluid back to the inlet of the fluid treatment unit; and sending the remainder of the treated fluid to the point in the production process.

Preferably, the method comprises re-circulating a fraction of fluid that has passed through the fluid treatment unit and re-circulating a fraction of fluid that has passed through the downstream treatment units before sending the remainder to the point in the production process.

Preferably, the fluid flux requirement is an injection water flux requirement at an inlet to a well; and wherein the remainder of the treated fluid is sent to the well as injection water.

An example of a process according to the present invention will now be described with reference to the accompany drawings in which:
Figure 1 is a process diagram for a conventional seawater treatment system;
Figure 2 is a process diagram for a conventional seawater treatment system showing several sub units in parallel;
Figure 3 shows a first example of a fluid treatment system according to the present invention;
Figure 4 shows a second example of a fluid treatment system according to the present invention; and,
Figure 5 is a flow diagram of an example of a method of operating the system of Figs.3 or 4

A fluid treatment installation is generally built to accommodate the flux to produce the maximum required amount of fluid, for example in a seawater treatment unit, the maximum required amount of injection water. However, for the example of injection water, during the lifetime of the oilfield the required amount of treated water for injection may reduce and there may be shorter term variation about the reduced requirement. For drinking water and dairy production, there may also be variations in the demand for treated fluid. If not operated at, or close to this design flux, the quality and quantity of product output from the treatment plant is reduced. For such systems, designed to operate with a constant flow, turndown is generally achieved by dumping treated fluid, rather than reducing the flux at the input to the treatment unit. As explained above, for the case of injection water, dumping treated water into the sea to maintain the flux through the various membranes of the treatment unit, such as sulphate removal membranes, or reverse osmosis membranes, or through deaeration systems in an offshore water treatment plant should be avoided because this may cause a biological imbalance in or near to the dumping area. More generally, generating more treated fluid than is actually required is uneconomic and unnecessarily increases the use of treatment chemicals.

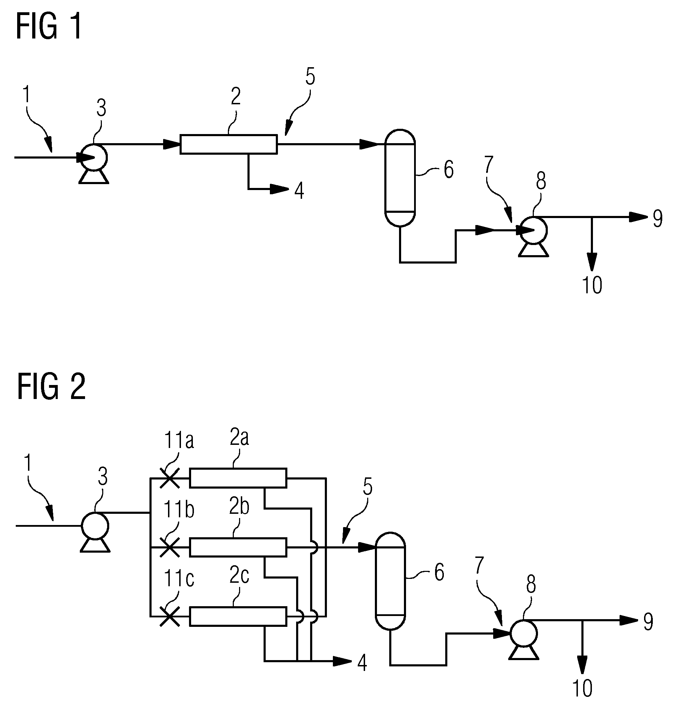

Fig.1 illustrates a conventional system. Pre-treated seawater 1 enters a sulphate removal unit 2 via a sulphate removal booster pump 3. At the output of the sulphate removal unit 2, one outlet 4 is for salt concentrated seawater, which is dumped, the other outlet 5 is for low sulphate water which is fed to a deaerator 6. After deaeration, the treated water 7 passes through a water injection booster pump 8. The output of the water injection pump 8 is either sent as injection water 9 to the well, or if there is excess treated water 10, above the well's requirement, this is dumped in the surrounding sea.

As explained above, varying the flux, for example reducing it to that needed for a reduced injection water requirement, rather than keeping at the design flux of the system, is likely to reduce performance of the treatment system. Sulphate removal or reverse osmosis membranes in particular are designed to operate with constant flow, so varying the flow may result in the treated water not being of the required quality, leading to corrosion, or damage to the production equipment. As the well ages, the amount of treated injection water required varies, typically reducing from the maximum for which it was designed, but given the treatment system's typically limited flux operating range, a better way of achieving the required turndown is needed. Flexible adjustment to lower the flow requirements, whilst still maintaining performance and quality, is desired.

One option to reduce the extent of the dumping of treated water is to design the system to have several sub-units of each type of treatment unit, for example sulphate removal, reverse osmosis units, or deaeration units, in parallel, that can be individually stopped. An example of this is shown in Fig.2. The components 1 and 3 to 10 are the same and perform the same function as in Fig.1. Instead of a single treatment unit 2, a parallel arrangement is used, illustrated here, for convenience, as three treatment sub-units 2a, 2b, 2c, although this number can be adapted to the specific requirement. Typically, there would be two, three or four, sub-units, depending on the system mass flow requirements. Each sub-unit is provided with a valve 11a, 11b, 11c at the entry, which can be switched on or off to control whether or not feed water enters that sub-unit, according to the volume of injection water 9 required for the well. Thus, when the injection flow rate reduces, turndown for the water injection system is achieved by stopping one or more of the sub-units 2a, 2b, 2c. The problem with stopping a unit is that the membranes used need to be preserved, which is a time consuming operation and may take several days. This increases the capital cost, as well as needing maintenance each time a unit is shut down.

Depending on the amount of turndown required, some capacity may be removed by stopping a sub-unit and some by dumping, so less treated water goes back to the sea. The system may then be designed with fewer sub-units, but when the units produce more than needed, there would still be a need to dump the excess water. The capital cost of this option is lower, but the operating costs are higher due to the amount chemical and energy used that is wasted when the treated water is dumped.

The present invention provides a system and a method of operation designed to reduce the amount of treated water that is dumped, by keeping the treated water in the treatment loop. In addition, this has the benefit of reducing the amount of energy use and chemical use in the treatment process because less new water has to be fully treated. This may also extend the lifetime of the membranes in the treatment unit, as they do not have to process the same amount of untreated seawater as a conventional system, over the same period of operation of the well. Treated water having reduced salts and reduced oxygen, relative to the original seawater feed, is fed back to join new feed water entering the treatment units, for example the salt reducing membrane units, such as sulphate removal membranes. The treated water may be fed back directly after treatment, or may proceed further through the downstream system before being fed back to the feed water inlet to the treatment units. By adapting to the actual requirement, flux or flow load on upstream treatment is reduced and so more economical. The amount of treatment needed is reduced by feeding the system with already treated fluid.

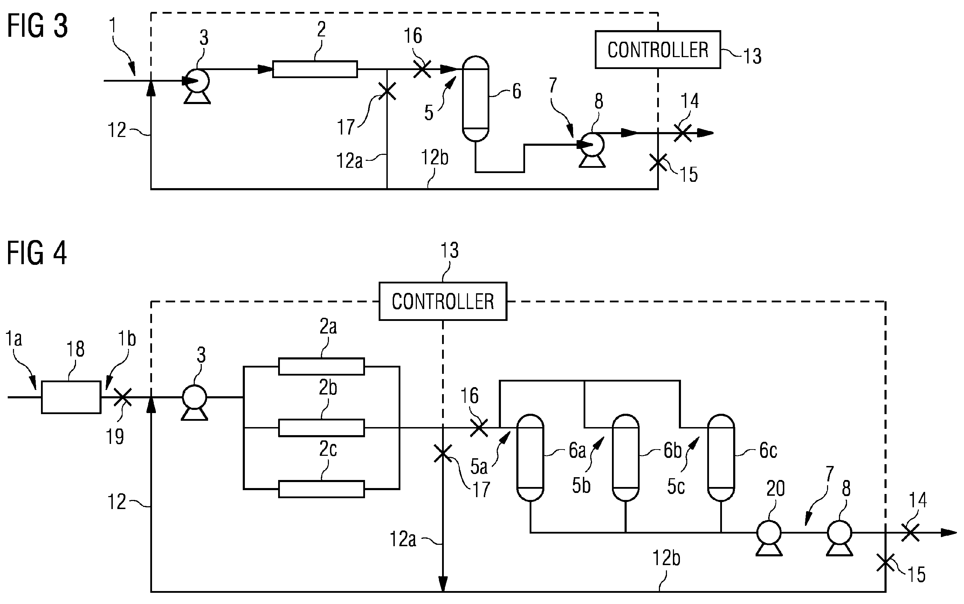

Figure 3 illustrates an example of a fluid treatment system according to the invention. Feed fluid 1 from a fluid feed source enters a treatment unit 2, via a feed fluid pump 3. The feed fluid may, for example, be seawater, for well injection water. The treatment unit may be a salt removal unit, typically for removing sulphate and other salts, or a reverse osmosis unit. Treated fluid 5 is typically input to a downstream treatment unit, such as a deaerator 6 before the treated fluid, in this case, deaerated fluid 7, passes through an injection pump 8 and is fed to a well as injection water 9. There may also be a smaller booster pump (not shown) before the injection pump 8, to increase the pressure for the water injection pumps. The examples are given for treatment of seawater for water injection, but the basic design may be adapted for use in drinking water treatment or diary production and the invention is not limited to seawater treatment. For drinking water treatment, reverse osmosis treatment is typically followed by a chemical polishing step to avoid unwanted biological osmotic reactions in consumption. In dairy production, reverse osmosis may be used as part of the production process.

As the requirement of the well varies with time, the amount of injection water may be varied by altering the opening of a valve 14 in the injection water line 9. Any excess treated water above the amount required at that time for well injection 9 is returned via line 12b and recirculation line 12 to the inlet of the treatment unit under the control of a controller 13 which opens a valve 15 to allow the appropriate amount to flow through the return line. The return line 12b is downstream of the booster pump, if used, or downstream of the injection pump 8. The fraction of raw seawater and re-circulated treated water entering the feed water pump 3 may vary, but the controller 13 operates an integrated control loop with system normalization equations for the control valves in the process. The treated water may enter a re-circulation loop at an earlier stage in the cycle, for example via line 12a, directly after the treatment unit 2, or some treated water may be re-circulated at each stage, according to the requirement and in response to control signals from controller. The treated fluid 12 at the input to the treatment units 2 is the combination of treated fluid from both recirculation lines 12a, 12b, if both are provided.

The recirculation may be combined with use of a number of sub-units in the fluid treatment unit, or the downstream treatment units, as illustrated in Fig.4. Feed fluid 1a may be pre-treated in feed fluid pre-treatment units 18 and the pre-treated feed fluid 1b passes through fluid pump 3 and enters fluid treatment sub-units 2a, 2b, 2c, arranged in parallel. All of the treated fluid may pass through valve 16 to supply each of the downstream units, for example, deaerator units 6a, 6b, 6c at inlets 5a, 5b, 5c, or the controller may adjust the valve opening of valves 16, 17, so that some treated fluid is re-circulated at this stage via line 12a. Fluid from the downstream units, in this example, deaerated water, may pass through an optional booster pump 20 to increase the pressure for an input 7 to fluid injection pump 8 and again the controller determines the extent of opening of valves 14, 15 so that the amount of treated fluid to meet the requirement of the specified point in a production process, in this example injection water to meet the requirement of the well, is provided and any excess is recirculated via line 12b.

Recirculated fluid 12 from lines 12a, 12b is combined and input to the feed fluid pump 3. The controller 13 controls the amount of recirculated fluid 12 entering, so that the flux into the fluid treatment unit remains substantially constant. The feed fluid is topped up to keep a constant system flow, under the control of a system controller (not shown). Valve 19 is controlled accordingly. For the examples described in Figs.3 and 4, to produce well injection water on an offshore platform, the feed fluid 1 is typically seawater, the fluid treatment units 2 are typically sulphate removal units, or reverse osmosis units and the downstream treatment units 6 are typically deaeration units, for example membrane deaerators. For drinking water treatment, the treatment units may be reverse osmosis units and the downstream units may be chemical polishing units.

Under the control of controller 13, with or without sub-units in each of the treatment units 2, 6 as illustrated in Figs.3 and 4, or any combination of single units or parallel sub-units in each of the treatment and pre-treatment stages, treated fluid recirculation makes a more flexible injection rate possible without dumping of treated fluid, while maintaining a substantially constant flux for the treatment units. The size of the treatment units 2, such as salt reducing membrane units, may be optimized with respect to flow and footprint. The downstream units 6, such as deaeration units or chemical polishing units, or the treatment units, such as salt removal units, or reverse osmosis units, may be constructed as parallel sub-units, so increasing the flexibility of the overall system. Feed fluid consumption, as well as wear and tear on the upstream system, is reduced when operating one or more of the recirculation loops 12a, 12b. This reduces operational and maintenance costs. Other beneficial effects are that the recirculation of treated fluid gives rise to better performance in the treatment units and downstream units for the treated fluid and that the load on the pre-treatment system 18 for the feed fluid before the fluid is fed into the treatment units, also reduces cost and maintenance.

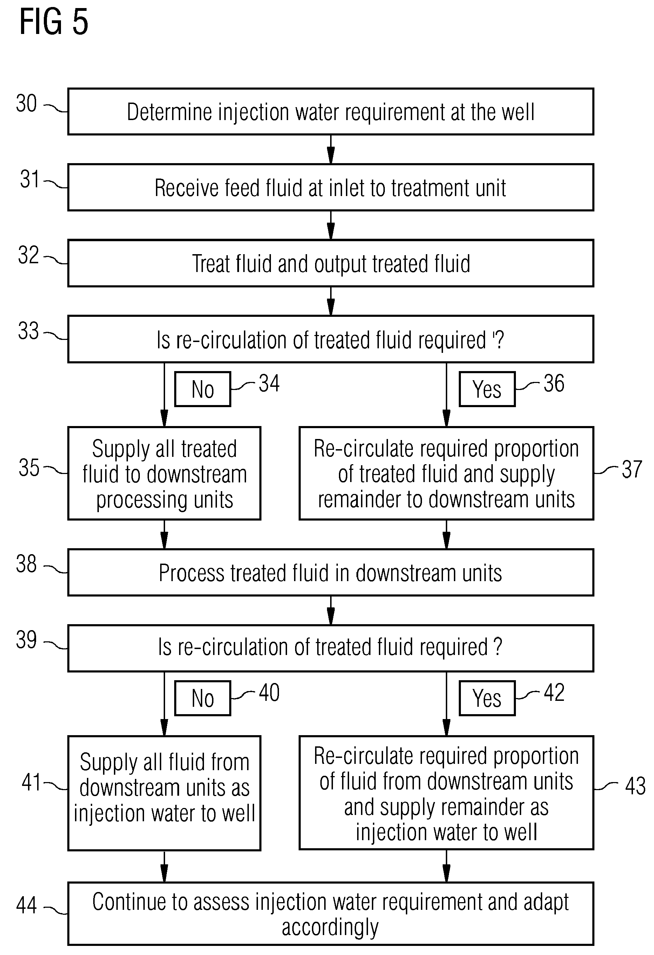

Fig.5 is a flow diagram showing the operation steps for the water treatment system of Figs.3 and 4. Using target flow based on production profile and production results and stored data relating to the design of the fluid treatment units 2 and downstream treatment units 6, the controller determines 30 the requirement for injection water at the well. Feed water 1 is received 31 at an inlet to a fluid treatment unit 2 and the fluid is treated, then output. The feed water may have had one or more pre-treatment steps applied in pre-treatment units (not shown), for example chemical treatment. The fluid treatment unit may comprise a single unit, or parallel banks of treatment sub-units. The controller determines 33 whether re-circulation of the treated water is required at this stage, for example if the flux requirement at the inlet to the well is below the design flux at the outlet of the treatment unit, there is a need to recirculate some of the treated fluid and the controller determines whether some of this recirculation should take place directly after the treatment units. If not 34, then all the treated water is supplied 35 to downstream processing units 6. The downstream processing unit may be a single unit, or a parallel bank of downstream processing sub-units. If re-circulation is required 36 at this stage, then the controller sends a signal to cause a valve 17 in line 12a to open sufficiently to take off the necessary proportion of the treated fluid 5 and that fluid is re-circulated 37 to the feed water inlet/feed pump 3. The remainder is fed to the downstream units 6 and processed 38.

At the output of the downstream units, a further check is made 39 as to whether re-circulation of this fluid is required and if not 40, the controller allows all the fluid from the downstream units to be supplied 41 to the well as injection water. If there is an indication that re-circulation is required 42, the controller opens valve 15 sufficiently to allow the required proportion of the output of the downstream treatment units to be recirculated 43 and the remainder is supplied to the well as injection water. The process of sensing and determining the well injection water requirement and adapting the amount of recirculation at one or both stages 12a, 12b continues, either at regular intervals, or in response to a detected change in sensed data exceeding a threshold.

A further mechanism (not shown) for very fine control of the amount of well injection water produced without altering the flux into the treatment unit is to allow small amounts of treated water to be dumped, either after the treatment unit, or after deaearation, for example, up to 5% of the generated capacity. This still improves the water quality of the water surrounding the platform, by significantly reducing the amount of dumping compared to the conventional dumping practice, but allows more precise control of the amount of injection water fed to the well.

## Claims

1. A fluid treatment system comprising an inlet to receive fluid from a fluid feed source; a feed fluid treatment unit; and one or more downstream treatment units; the system further comprising a treated fluid recirculation loop from an output of at least one of the feed fluid treatment unit, or the downstream treatment units; and a controller.

2. A system according to claim 1, wherein the feed fluid treatment unit comprises a plurality of feed fluid treatment sub-units in parallel.

3. A system according to claim 1 or claim 2, wherein at least one downstream treatment unit comprises a plurality of sub-units in parallel.

4. A system according to any preceding claim, wherein the feed fluid treatment unit comprise one of a salt removal unit, or a reverse osmosis unit.

5. A system according to any preceding claim, wherein the downstream treatment unit comprises at least one of a deaeration system or a chemical polishing unit.

6. A system according to any preceding claim, wherein the system further comprises feed fluid pre-treatment units.

7. A fluid treatment system according to any preceding claim, wherein the fluid comprises water.

8. A system according to any preceding claim, wherein the feed fluid comprises seawater, water supplies for drinking water, or fluid for dairy production.

9. A method of treating a fluid using a fluid treatment system according to any preceding claim, the method comprising determining a fluid flux requirement at a point in a production process; determining whether the flux requirement is below a treatment unit outlet flux upstream of that point; and if so, sending a signal from the controller to control an actuator to divert at least a fraction of the treated fluid back to the inlet of the fluid treatment unit; and sending the remainder of the treated fluid to the point in the production process.

10. A method according to claim 9, wherein the method comprises re-circulating a fraction of fluid that has passed through the fluid treatment unit and re-circulating a fraction of fluid that has passed through the downstream treatment units before sending the remainder to the point in the production process.

11. A method according to claim 9 or claim 10, wherein the fluid flux requirement is an injection water flux requirement at an inlet to a well; and wherein the remainder of the treated fluid is sent to the well as injection water.
